# EUROPEAN PATENT APPLICATION

(11) **EP 2 607 805 A1**
(43) Date of publication of application: **26.06.2013**
(21) Application number: 11818088.4
(22) Date of filing: 05.08.2011
(51) Int. Cl.: F24F 11/02

(54) **OUTDOOR-AIR TREATING AIR CONDITIONER AND MULTI-AIR CONDITIONING SYSTEM USING SAME**

(30) Priority: 20.08.2010 JP 2010184793
(71) Applicant: Mitsubishi Heavy Industries, Ltd., Tokyo 108-8215 (JP)
(72) Inventor: YAMAGUCHI, Toru, Tokyo 108-8215 (JP)
(74) Representative: Henkel, Breuer & Partner
(86) International application number: PCT/JP2011/067972
(87) International publication number: WO 2012/023446

(57) **Abstract**

The purpose of the present invention is to provide an outdoor-air treating air conditioner and a multi-air conditioning system using the outdoor-air treating air conditioner, which can prevent overcooling and overheating to improve the feeling of air conditioning and can also save energy by simply setting the room temperature in the same manner as with a conventional air conditioner. An outdoor-air treating air conditioner which controls a blowing-air temperature to be at a constant level by controlling pressure to be at a constant level and which treats outdoor air according to a set indoor enthalpy condition to supply the treated outdoor air to inside a room, wherein, if a measured room temperature value reaches a set value, a target pressure value and a target blowing-air temperature value are automatically changed to a preset target pressure value and a preset target blowing-air temperature value, respectively, the pressure and the blowing-air temperature are controlled to be at constant levels on the basis of the target pressure value and the target blowing-air temperature value, and in addition therma-on/off control is performed according to whether or not the difference between the measured room temperature value and the set value has reached a set temperature difference.

## Description

### {Technical Field}

The present invention relates to an outdoor-air treating air conditioner that introduces outdoor air and supplies it to an indoor space while adjusting the temperature thereof and to a multi-unit air conditioning system employing the same.

### {Background Art}

For air conditioning in small to medium size buildings, the use of a multi-unit air conditioning system, in which a plurality of indoor air conditioners are connected in parallel to an outdoor unit, has become mainstream. In such a building air conditioning system, outdoor air must be introduced because ventilation is needed. Because the outdoor air reaches high temperature during the summer and drops to low temperature during the winter, if air conditioning is performed by introducing the outdoor air using all of the indoor air conditioners, the system is subjected to a large load. Therefore, an outdoor-air treating air conditioner that supplies outdoor air to an indoor space by treating it so as to achieve a certain temperature condition, which is referred to as an outdoor-air treatment unit, has been provided. This outdoor-air treating air conditioner is employed alone or in combination with an indoor air conditioner that takes in indoor air and blows it out while adjusting it to a set temperature.

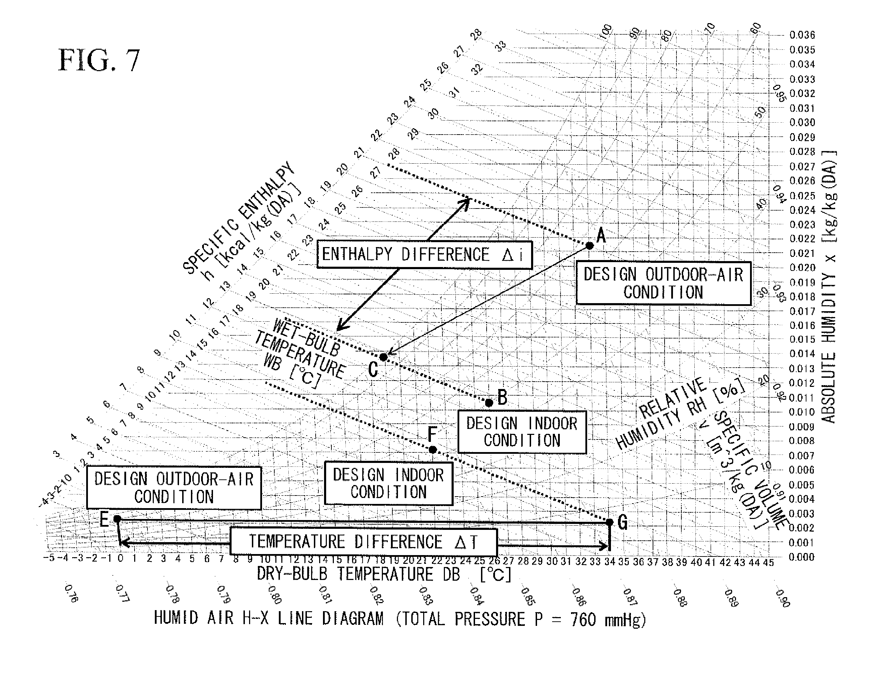

The outdoor-air treating air conditioner is an air conditioner that treats the outdoor air to achieve a certain condition and supplies it to the indoor space, and it treats for example, outdoor air of design outdoor-air condition A so as to achieve condition C having equal enthalpy to design indoor condition B during cooling, and treats outdoor air of design outdoor-air condition E so as to achieve condition G having equal enthalpy to design indoor condition F during heating, as shown in Fig. 7. Because of this, the outdoor-air treating air conditioner is generally controlled by means of constant-pressure control so that the blowout temperature is kept constant. Patent Literature 1 discloses a system in which an outdoor-air treating air conditioner, connected in parallel with a regular indoor air conditioner, is automatically operated in the air blowing mode in which outdoor air is introduced without treatment when the outdoor-air temperature is 15 to 25 °C, in the heating mode (at a constant blowout temperature of 22 °C) when the outdoor-air temperature is 15 °C or less, and in the cooling mode (at a constant blowout temperature of 18 °C) when the outdoor-air temperature is 25 °C or less.

For a multi-unit air conditioning system in which regular indoor air conditioners and outdoor-air treating air conditioners are connected in parallel, Patent Literature 2 discloses a system in which, when a set temperature is reached in door spaces, the regular indoor air conditioners are switched to thermo-off mode and the indoor air conditioners that are performing local air conditioning continue to be operated without any change, and, additionally, when the number of local air conditioning units is increased, causing the room temperature to drop below the set temperature, a set blowout-temperature value for the outdoor-air treating air conditioners under the constant-blowout-temperature control is increased from 18 °C to 22 °C, thereby avoiding overcooling.

### {Citation List}

### {Patent Literature}

{PTL 1} Japanese Unexamined Patent Application, Publication No. Hei 9-287800
{PTL 2} PCT International Publication No. WO 2008/087959 {Summary of Invention}

### {Technical Problem}

The outdoor-air treating air conditioner is operated under the constant-blowout-temperature control by setting the blowout temperature at, for example, 18 to 26 °C during cooling and 18 to 23 °C during heating. Because of this, overcooling or overheating tends to occur during mid-seasons in which the load drops, and this tendency becomes more pronounced especially when the outdoor-air treating air conditioner is installed in a small room. This is because control is performed using the same blowout temperature during the summer and the mid-season, or during the winter and the mid-season. In order to avoid such a situation, it is necessary to change the blowout temperature such that, for example, it is set at 18 °C during the summer and 26 °C during the mid-seasons. However, in the field of air conditioners in which intake temperature is changed in general, the action of changing the blowout temperature has presented a problem in that general users are unfamiliar with such an operation.

On the other hand, as with Patent Literature 2, the air conditioning comfort can be improved by avoiding overcooling by controlling the set blowout-temperature value for the outdoor-air treating air conditioner under the constant-blowout-temperature control so as to be increased when the room temperature drops below the set temperature. However, with a conventional outdoor-air treating air conditioner, regardless of the indoor temperature, the operation thereof is generally continued until the intake temperature (outdoor-air temperature) reaches, for example, the set blowout-temperature value + 1 degree and the operation is switched to thermo-off mode when the intake temperature (outdoor-air temperature) reaches the set blowout-temperature value + 1 degree, and therefore, there is a problem in that a sufficient energy-saving effect cannot be obtained.

The present invention has been conceived in light of the above-described circumstances, and an object thereof is to provide an outdoor-air treating air conditioner, and a multi-unit air conditioning system employing the same, with which the air conditioning comfort can be improved by avoiding overcooling and overheating by setting the room temperature with the same intuitiveness as with a regular air conditioner, and with which a high energy-saving effect can be obtained.

### {Solution to Problem}

In order to solve the above-described problems, an outdoor-air treating air conditioner and a multi-unit air conditioning system employing the same according to the present invention employ the following solutions.
Specifically, an outdoor-air treating air conditioner according to a first aspect of the present invention is an outdoor-air treating air conditioner that controls blowout temperature to be constant by means of constant-pressure control and that supplies outdoor air to an indoor space after treating the outdoor air so as to have enthalpy for a set indoor condition, wherein target values of pressure and the blowout temperature are automatically changed to a preset target pressure and target blowout temperature, respectively, when an actual measured value of room temperature reaches a set value, so that the pressure and the blowout temperature are controlled to be constant on the basis of the target pressure and the target blowout temperature; and thermo-on/off control is also performed depending on whether or not a difference between the actual measured value of the room temperature and the set value has reached a set temperature difference.

With the first aspect of the present invention, in the outdoor-air treating air conditioner with which the blowout temperature is controlled to be constant by means of constant-pressure control, the target values of pressure and blowout temperature are automatically changed to the predetermined target pressure and target blowout temperature, respectively, when the actual measured value of room temperature reaches the set value, so that the pressure and the blowout temperature are controlled to be constant on the basis of the target pressure and the target blowout temperature, and the thermo-on/off control is also performed depending on whether or not the difference between the actual measured value of room temperature and the set value has reached the set temperature difference. Therefore, a user can set the room temperature with the same intuitiveness as with a regular indoor air conditioner, and, by automatically changing the target values of the pressure and the blowout temperature to the predetermined target pressure and the target blowout temperature, respectively, when the actual measured value of room temperature has reached that set value, the pressure and the blowout temperature can be controlled to be constant on the basis of the target pressure and the target blowout temperature. Specifically, during cooling, the intake pressure (low pressure) is detected and the pressure can be controlled to be constant by means of compressor rotational speed control so that the detected value reaches the target pressure; and the blowout temperature is also detected and the blowout temperature can be controlled to be constant by means of degree-of-opening control of the expansion valve so that the detected value reaches the target blowout temperature. During heating, the blowing pressure (high pressure) is detected and the pressure can be controlled to be constant by means of compressor rotational speed control so that the detected value reaches the target pressure; and the blowout temperature is also detected and the blowout temperature can be controlled to be constant by means of degree-of-opening control of the expansion valve so that the detected value reaches the target blowout temperature. Accordingly, overcooling and overheating caused by the outdoor-air treating air conditioner can be prevented, and the air conditioning comfort can be improved. In addition, it is possible to save energy by decreasing the compressor operating frequency by changing the target pressure, and the energy-saving effect can also be improved further switching to thermo-off mode (stopping the compressor) when the difference between the actual measured value of room temperature and the set value reaches the set temperature difference.

Furthermore, in the outdoor-air treating air conditioner according to the first aspect of the present invention, a certain continuation time is set in the above-described outdoor-air treating air conditioner when changing the pressure and the blowout temperature, as well as when switching between thermo on/off modes.

With the first aspect of the present invention, because the certain continuation time is set when changing the pressure and the blowout temperature, as well as when switching between thermo on/off modes, the timing of changing the pressure and the blowout temperature, as well as the timing for switching between thermo on/off modes is determined using the certain continuation time, depending on whether or not the actual measured value of room temperature has reached the set value or whether or not the temperature difference therebetween has reached the set temperature difference. By doing so, hunting can be prevented. Accordingly, hunting can be suppressed when automatically changing the pressure and blowout temperature or when switching between thermo on/off modes, which makes it possible to stabilize the control.

In addition, a multi-unit air conditioning system according to a second aspect of the present invention is a multi-unit air conditioning system in which a plurality of indoor air conditioners are connected in parallel, and at one or more of or all of the indoor air conditioners serve as outdoor-air treating air conditioners, wherein the outdoor-air treating air conditioners are any of the above-described outdoor-air treating air conditioners.

With the second aspect of the present invention, in the multi-unit air conditioning system in which the plurality of indoor air conditioners are connected in parallel, because one or more of or all of these indoor air conditioners therein serve as any of the above-described outdoor-air treating air conditioners, in the case in which only the outdoor-air treating air conditioners are operated, overcooling and overheating can be prevented with the same operation control as that described above, and the air conditioning comfort can also be improved, and the energy-saving operation can also be performed by operating the compressor at as low an operating frequency as possible or by stopping it. In addition, in the case in which the regular indoor air conditioners are operated in combination, by controlling the operation by means of constant-pressure control so that the blowout temperature is kept constant in accordance with the operation of the indoor air conditioners, without controlling changing of the pressure and the blowout temperature at the outdoor-air treating air conditioners, or by operating the indoor air conditioners and the outdoor-air treating air conditioners on the basis of predetermined rules, both types of units can be operated in combination. Accordingly, the present invention can also be employed in a multi-unit air conditioning system in which a mix of regular indoor air conditioner and the outdoor-air treating air conditioner are provided.

In addition, with the multi-unit air conditioning system according to the second aspect of the present invention, with regard to the control for changing the pressure and the blowout temperature in the above-described multi-unit air conditioning system, switching can be made by means of at least one of the following: (1) when requests are issued from all of the outdoor-air treating air conditioners; (2) when a request is issued from a representative outdoor-air treating air conditioner that is specified in advance; and(3) when requests are issued from a certain proportion of the outdoor-air treating air conditioners that is set in advance.

With the second aspect of the present invention, with regard to the control for changing the pressure and blowout temperature, because switching can be performed by means of at least one of the following: (1) when requests are issued from all of the outdoor-air treating air conditioners; (2) when a request is issued from the representative outdoor-air treating air conditioner that is specified in advance; and (3) when requests are issued from the certain proportion of the outdoor-air treating air conditioners that is set in advance, even if the requests for the energy-saving operation control, for which the target pressure and the target blowout temperature are changed, are issued separately from the plurality of the outdoor-air treating air conditioners, by presetting which of (1) to (3) is used for switching, the energy-saving operation can be appropriately performed by one of them. Specifically, in the multi-unit air conditioning system, even if the requests for the energy-saving operation control are issued separately from the plurality of the outdoor-air treating air conditioners, only one set pressure value can be set for the indoor air conditioners and the outdoor-air treating air conditioners that are connected to the same refrigerant system. However, by presetting the conditions as in (1) to (3) described above and by presetting which condition is used for performing switching, the energy-saving operation can be performed appropriately. Because all of the outdoor-air treating air conditioners are requesting a capacity drop in case (1), shifting in the direction that decreases the capacity will not cause any problem. In case (2), although a comfort level of a specific room is prioritized at the expense of other rooms to some extent, there will not be a serious problem because air conditioning itself is maintained. Case (3) is most preferable in terms of the energy-saving operation because switching in this case is performed in response to the requests from the certain proportion of the outdoor-air treating air conditioners. Although the proportion in this case is generally set at 50 %, the ratio may be appropriately changed in accordance with the situation.

Furthermore, with the multi-unit air conditioning system according to the second aspect of the present invention, the above-described multi-unit air conditioning system is provided with switching means for selectively switching which of the above-described methods (1) to (3) is used for performing the control for changing the pressure and the blowout temperature.

With the second aspect of the present invention, because the switching means for selectively switching which of (1) to (3) described above is used to for performing the control for changing the pressure and blowout temperature is provided, by using the switching means provided in an outdoor controller or the like, the most appropriate switching method can be selected from (1) to (3) in accordance with the installation environment of the multi-unit air conditioning system. Accordingly, the multi-unit air conditioning system can be operated in the most appropriate state for the installation environment.

### {Advantageous Effects of Invention}

With an outdoor-air treating air conditioner of the present invention, a user can set the room temperature with the same intuitiveness as with a regular indoor air conditioner, and, by automatically changing target values of pressure and blowout temperature to predetermined target pressure and the target blowout temperature, respectively, when an actual measured value of room temperature has reached that set value, the pressure and the blowout temperature can be controlled to be constant on the basis of the target pressure and the target blowout temperature. Specifically, during cooling, the intake pressure (low pressure) is detected, and the pressure is controlled to be constant by means of compressor rotational speed control so that the detected value reaches the target pressure; and the blowout temperature is also detected and the blowout temperature is controlled to be constant by means of degree-of-opening control of the expansion valve so that the detected value reaches the target blowout temperature. During heating, the blowing pressure (high pressure) is detected and the pressure can be controlled to be constant by means of compressor rotational speed control so that the detected value reaches the target pressure; and, the blowout temperature is also detected and the blowout temperature can be controlled to be constant by means of degree-of-opening control of the expansion valve so that the detected value reaches the target blowout temperature. Accordingly, overcooling and overheating caused by the outdoor-air treating air conditioner can be prevented, and the air conditioning comfort can be improved. In addition, it is possible to save energy by decreasing the compressor operating frequency by changing the target pressure, and the energy-saving effect can also be improved further by switching to thermo-off mode (stopping the compressor) when the difference between the actual measured value of the room temperature and the set value reaches a set temperature difference.

With a multi-unit air conditioning system of the present invention, in the case in which only the outdoor-air treating air conditioners are operated, with the same operation control as that described above, overcooling and overheating can be prevented, the air conditioning comfort can also be improved, and the energy-saving operation can also be performed by operating the compressor at as low an operating frequency as possible or by stopping it. In addition, in the case in which regular indoor air conditioners are operated in combination, by controlling the operation by means of constant-pressure control so that the blowout temperature is kept constant in accordance with the operation of the indoor-air conditioners, without controlling changing of the pressure and the blowout temperature at the outdoor-air treating air conditioners, or by operating the indoor air conditioner and the outdoor-air treating air conditioner on the basis of predetermined rules, both types of units can be operated in combination. Accordingly, the present invention can also be employed in a multi-unit air conditioning system in which a mix of regular indoor air conditioner and the outdoor-air treating air conditioner are provided.

### {Brief Description of Drawings}

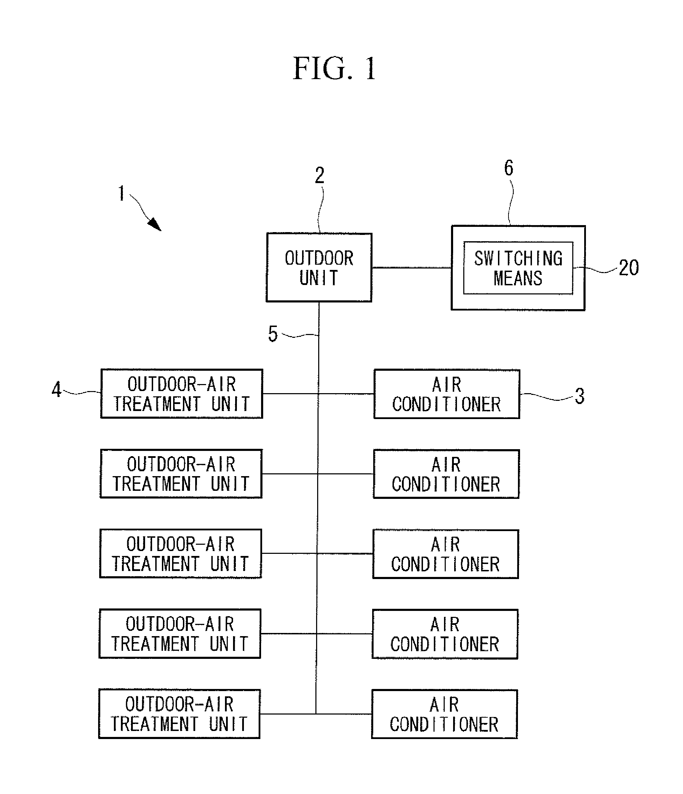

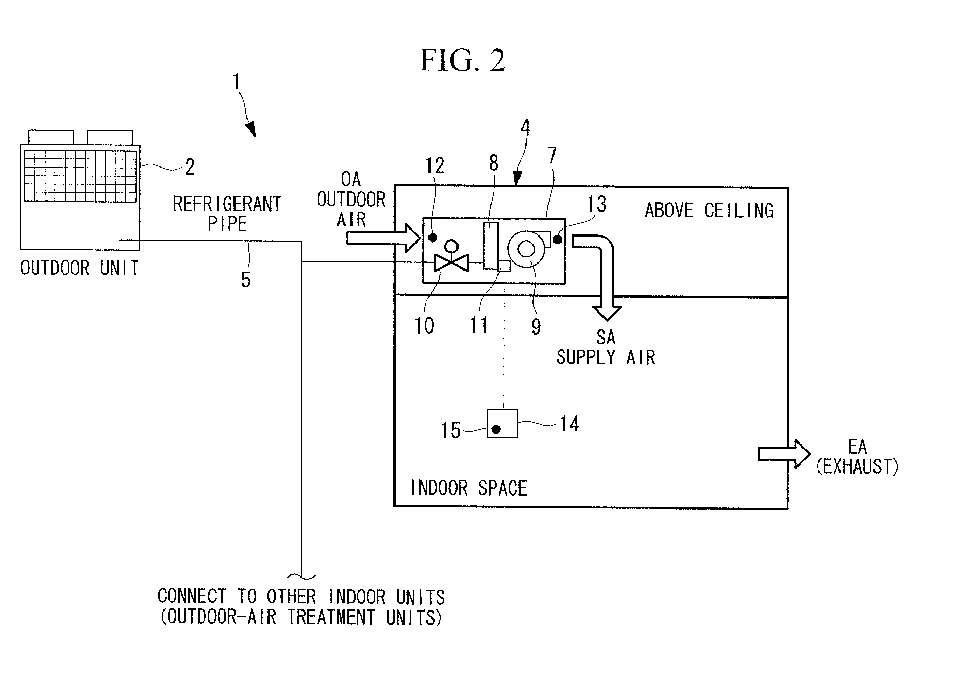

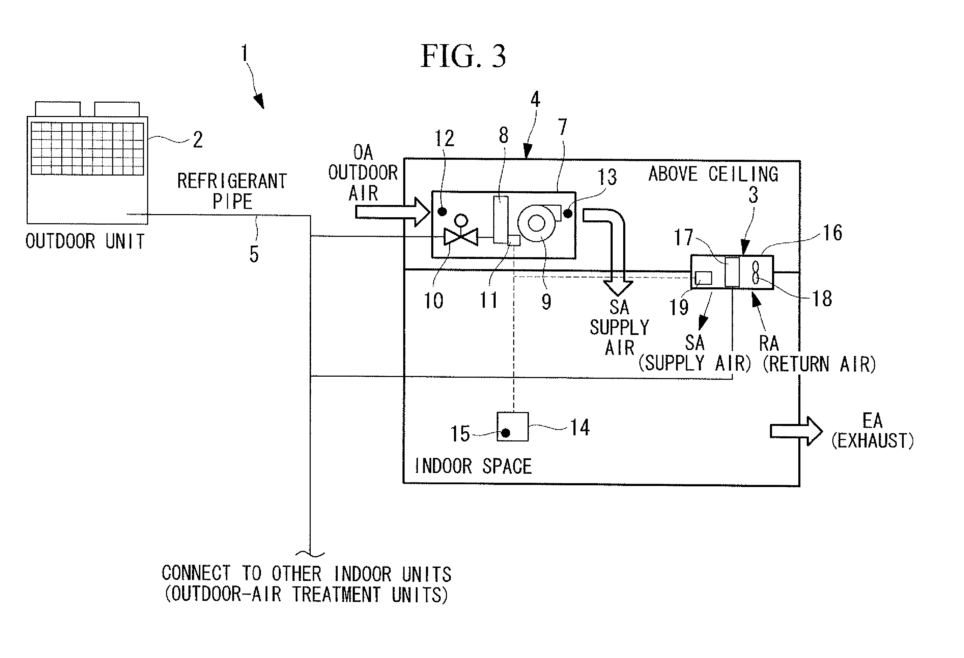

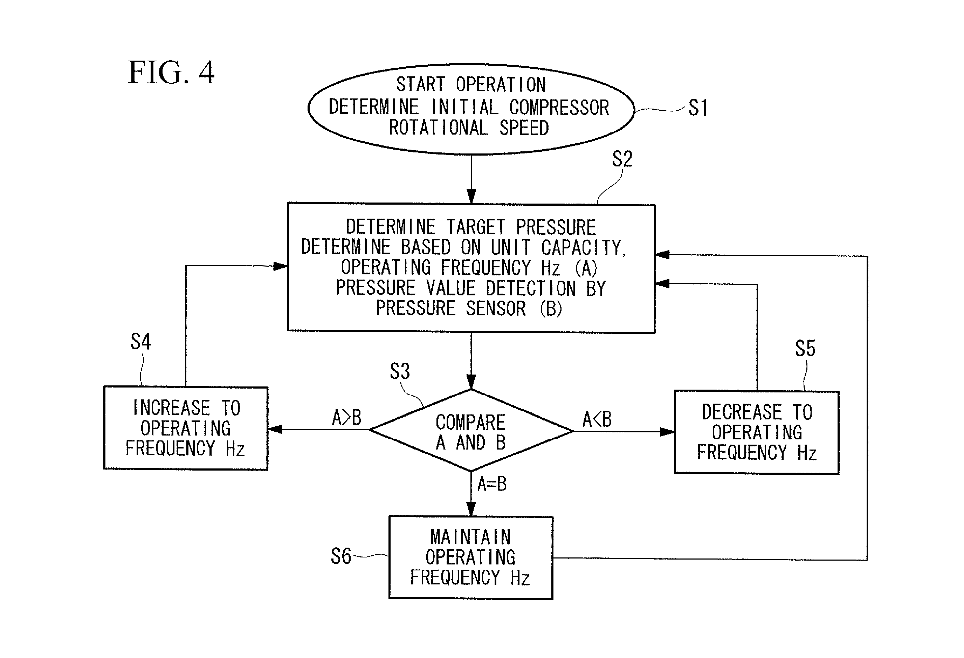

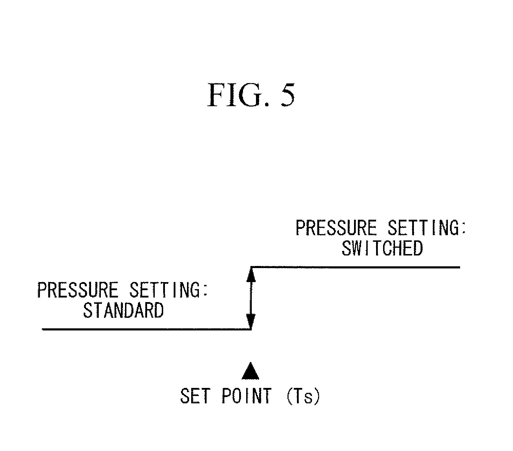

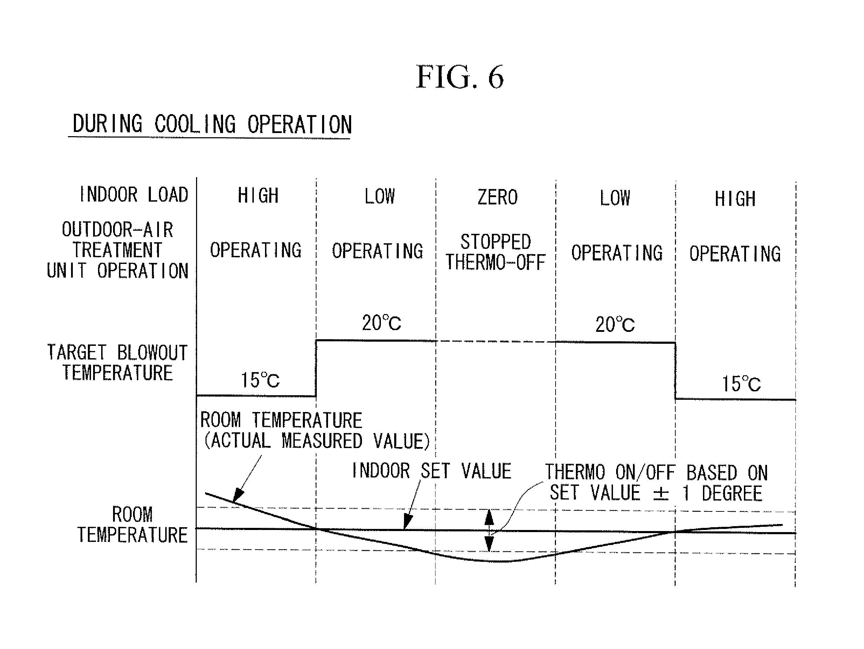

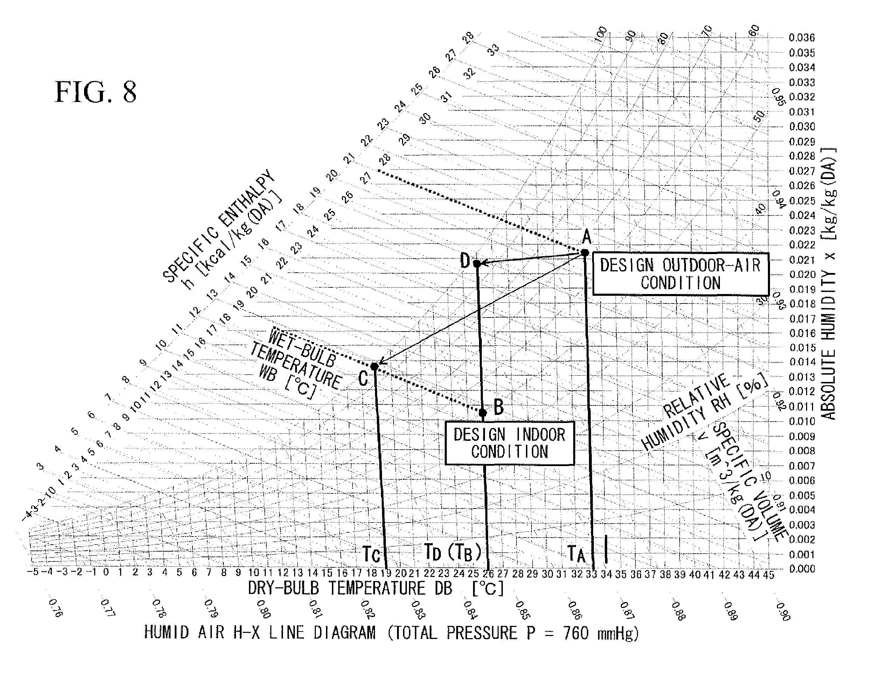

{Fig. 1} Fig. 1 is a conceptual diagram of a multi-unit air conditioning system according to an embodiment of the present invention.
{Fig. 2} Fig. 2 is a configuration diagram of an outdoor-air treating air conditioner employed in the multi-unit air conditioning system shown in Fig. 1.
{Fig. 3} Fig. 3 is a configuration diagram of a multi-unit air conditioning system in which the outdoor-air treating air conditioner shown in Fig. 2 and an indoor air conditioner are employed in combination.
{Fig. 4} Fig. 4 is a flow chart for the constant-pressure control of the outdoor-air treating air conditioner shown in Fig. 2.
{Fig. 5} Fig. 5 is a conceptual diagram for the operation when switching the pressure in the outdoor-air treating air conditioner shown in Fig. 2.
{Fig. 6} Fig. 6 is a timing chart for the cooling operation of the outdoor-air treating air conditioner shown in Fig. 2.
{Fig. 7} Fig. 7 is a psychrometric chart for explaining the basic operation of an outdoor-air treating air conditioner.
{Fig. 8} Fig. 8 is a psychrometric chart for explaining the operation of the outdoor-air treating air conditioner shown in Fig. 2.

### {Description of Embodiment}

An embodiment of the present invention will be described below with reference to Figs. 1 to 8.
Fig. 1 shows a conceptual diagram of a multi-unit air conditioning system according to the embodiment of the present invention. Fig. 2 shows a configuration diagram of an outdoor-air treating air conditioner employed in this system. Fig. 3 shows a configuration diagram of a multi-unit air conditioning system in which the outdoor-air treating air conditioner and an indoor air conditioner are employed in combination.
A multi-unit air conditioning system 1 is formed of an outdoor unit 2, and a plurality of regular indoor air conditioners (sometimes simply referred to as air conditioners) 3 and outdoor-air treating air conditioners (sometimes simply referred to as outdoor-air treatment units) 4 which are connected in parallel to each other with respect to the outdoor unit 2.

In the present invention, the regular indoor air conditioners (air conditioners) 3 are the type of air conditioners that take in indoor air and blow the air into an indoor space after cooling or heating it. In addition, the outdoor-air treating air conditioners (outdoor-air treatment units) 4 are the type of air conditioners that introduce the outdoor air and supply the air to the indoor space after treating it so as to have enthalpy equal to a set indoor condition. These indoor air conditioners 3 and outdoor-air treating air conditioners 4 are connected in parallel to each other via refrigerant pipes (liquid-side pipes and gas-side pipes) 5. As the multi-unit air conditioning system 1, there is a case in which the plurality of outdoor-air treating air conditioners 4 are connected and a case in which, as shown in Fig. 1, a mix of the indoor air conditioners 3 and the outdoor-air treating air conditioners 4 are connected. The outdoor unit 2 is provided with an outdoor controller 6.

As shown in Fig. 2, the outdoor-air treating air conditioners 4 are configured such that indoor heat exchangers 8, blowers 9, electronic expansion valves 10, indoor controllers 11, intake temperature sensors 12 that detect the intake-air temperature, blowout temperature sensors 13 that detect the blowout-air temperature, and so forth are provided in unit main bodies 7 which are installed above the ceiling via a duct. Wired remote controllers 14 that perform operation control of the outdoor-air treating air conditioners 4 are connected to the indoor controllers 11. The wired remote controllers 14 are provided with room temperature sensors 15 and so forth in addition to on/off switches, temperature setting means, and so forth for the outdoor-air treating air conditioners 4.

In addition, in the case of a mixed installation of the indoor air conditioners 3 and the outdoor-air treating air conditioners 4, the configuration thereof is such that ceiling-embedded type indoor air conditioners 3, in which, for example, indoor heat exchangers 17, blowers 18, electronic expansion valves (not shown), indoor controllers 19, and so forth are provided in unit main bodies 16, are disposed by being connected in parallel to the outdoor-air treating air conditioners 4, as shown in Fig. 3, the indoor air is taken in by the indoor air conditioners 3, and air conditioning is performed so that the intake temperature reaches a set temperature.

The outdoor-air treating air conditioner 4 is configured so that the blowout temperature is controlled to be constant basically by means of constant-pressure control, and, as shown in Fig. 7, for example, outdoor air of design outdoor-air condition A is treated so as to achieve condition C having equal enthalpy to design indoor condition B during cooling, and outdoor air of design outdoor-air condition E is treated so as to achieve condition G having equal enthalpy to design indoor condition F during heating. In this embodiment, in addition to this, the configuration is such that, the pressure and blowout temperature are automatically changed to a target pressure and a target blowout temperature, which are determined in advance in accordance with the set temperature, when an actual measured value of the room temperature detected by the room temperature sensor 15 reaches a set value Ts set by a user using the wired remote controller 14, and the pressure and the blowout temperature are controlled to be constant on the basis of the target pressure and the target blowout temperature.

Specifically, as shown in Fig. 8, because a blowout temperature Tc of the outdoor-air treating air conditioner 4 is normally kept lower than a design indoor condition Tb, cooling can be performed only with the outdoor-air treating air conditioner 4 during mid-seasons or when the load of a room is small, in which case, however, overcooling tends to occur. Therefore, when the room temperature reaches the set value Ts, causing the load to decrease, the target blowout temperature is changed from Tc to a blowout temperature Td (= Tb) of the preset condition D, and, simultaneously, the pressure (intake pressure) is increased to a preset target pressure. Fig. 8 shows an example in which the blowout temperature Tc is changed from 19 °C to 26 °C during cooling. During heating, on the other hand, because the blowout temperature is kept higher than the design indoor condition, in contrast to during cooling, overheating tends to occur when the load is small; therefore, in this case, the target blowout temperature is decreased and, simultaneously, the pressure (blowing pressure) is decreased to the preset target pressure.

The constant-pressure control is performed as shown in Fig. 4 by means of the outdoor controller 6. First, once the operation is started in Step S1 and the initial rotational speed of a compressor is determined, the process advances to Step S2. Here, a target pressure A is determined according to the unit capacity, operating frequency Hz, and so forth, and, also, intake pressure (low pressure) is detected by the pressure sensor during cooling, and blowing pressure (high pressure) is detected by the pressure sensor during heating, respectively, as a detected pressure value B. The target pressure A and the detected pressure value B are compared in Step S3. If A > B, the process advances to Step S4 and the operating frequency Hz of the compressor is increased. If A < B, the process advances to Step S5 and the operating frequency Hz of the compressor is decreased. If A = B, the process advances to Step S6, and the compressor operating frequency Hz is maintained. With the constant-pressure control, the pressure is controlled so that the intake pressure (low pressure) is kept constant during cooling, and the blowing pressure (high pressure) is kept constant during heating.

On the other hand, with the constant-blowout-temperature control, the blowout temperature is controlled to be constant by detecting the blowout temperature with the blowout temperature sensor 13 and by controlling the degree of opening of the electronic expansion valve 10, by means of the indoor controller 11, so that the detected value thereof reaches the target blowout temperature.
The outdoor-air treating air conditioner 4 of this embodiment is configured so that, in a unit that performs constant blowout-temperature control while performing constant-pressure control, when the load decreases, causing the room temperature to reach the set value Ts, overcooling and overheating are prevented by automatically changing the target pressure for the constant-pressure control and the target blowout temperature for the constant-blowout-temperature control, so that the energy-saving operation is performed simultaneously. In the following, on the basis of the timing chart in Fig. 6, an example of constant-pressure control and constant-blowout-temperature control during cooling will be described.

This example is an example of a case in which the outdoor-air treating air conditioner (outdoor-air treatment unit) 4 is operating under the constant-pressure control and the constant-blowout-temperature control with the target blowout temperature of 15 °C, and when the actual measured value of the room temperature detected by the room temperature sensor 15 gradually decreases, and when the room temperature reaches the set value Ts at the point a, the target blowout temperature is changed from the standard 15 °C to the preset 20 °C, and, simultaneously, the intake pressure (low pressure) is increased from the standard pressure to the preset target pressure. For this changing of the target blowout temperature and the target pressure, although switching is performed at the set value (point) Ts, as shown in Fig. 5, switching is set so as to be performed using a certain continuation time, for example, 2 minutes of continuation time. The continuation time may be variable.

Once the target blowout temperature and the target pressure are automatically changed at point a, the operating frequency Hz of the compressor is decreased, and energy-saving operation is performed under constant-blowout-temperature control and constant-pressure control in the state in which the capacity of the outdoor-air treating air conditioner 4 is decreased. In this case, because the load is made smaller, the decrease in the room temperature is made gradual. When the room temperature continues to decrease, and the difference between the room temperature and the set value Ts reaches a set temperature difference (set value Ts ± 1 degree) at point b, the outdoor-air treating air conditioner 4 is switched to thermo-off mode; that is to say, it is operated in a state in which only the blower 9 is operated. The room temperature that has slightly overshot the set value Ts - 1 degree starts to gradually increase by switching to this thermo-off mode, and the outdoor-air treating air conditioner 4 is switched to thermo-on mode when the difference between the room temperature and the set value Ts reaches the set temperature difference (set value Ts ± 1 degree) at a point c, and thus the operation of the compressor is restarted.

At this time, the target blowout temperature and the target pressure are kept at the temperature (20 °C) and pressure that changed at point a, and energy-saving operation is performed under constant-blowout-temperature control and constant-pressure control in the state in which the capacity of the outdoor-air treating air conditioner 4 is decreased. Because this operation is an energy-saving operation in which the target blowout temperature and the target pressure have been changed, the room temperature gradually increases, and when the room temperature reaches the set value Ts at point d, the target blowout temperature and the target pressure are decreased, respectively, to the standard temperature (15 °C) and the standard pressure, which are the values at the start of the operation. By repeating the above processes, the outdoor-air treating air conditioner 4 can be operated in the energy saving mode while preventing overcooling by automatically changing the target blowout temperature and the target pressure in accordance with the set room-temperature value.

Although the example described above is for the case of cooling, the energy-saving operation can similarly be performed during heating by automatically changing the target blowout temperature and the target pressure while avoiding overheating. However, during heating, the room temperature change is reversed as compared with the case shown in Fig. 6, and the blowout temperature is also decreased from, for example, the standard temperature of 40 °C to the target blowout temperature of 30 °C, and the blowing pressure (high pressure) is decreased from the standard pressure to the preset target pressure.

In addition, although one outdoor-air treating air conditioner 4 is employed in the above-described single-unit example, with a multi-unit air conditioning system 1 in which a plurality of outdoor-air treating air conditioners 4 are connected in parallel, there is a case in which a mix of the outdoor-air treating air conditioners 4 and the indoor air conditioners 3 are provided, and, furthermore, there are cases in which they are separately installed in multiple rooms, and so on. Because of this, the room temperatures reach the set temperatures Ts at varying timing, and thus, the individual outdoor-air treating air conditioners 4 separately issue requests for the energy-saving operation in which the target blowout temperature and the target pressure are changed. These outdoor-air treating air conditioners 4 and the indoor air conditioners 3 are connected to the same refrigerant system, and, because only one target pressure can be set therefor, it is necessary to set the processing pattern in advance.

The configuration in this embodiment is such that one of the following three patterns is selectable, and such that, by providing switching means 20 (see Fig. 1) in the outdoor controller 6, one of them can be freely selected in accordance with the installation environment, etc. of the multi-unit air conditioning system 1 so as to enable appropriate energy-saving operation.
(1) The target blowout temperature and the target pressure are changed when the requests are issued from all of the outdoor-air treating air conditioners 4.
(2) The target blowout temperature and the target pressure are changed when the request is issued from a representative outdoor-air treating air conditioner that is specified in advance.
(3) The target blowout temperature and the target pressure are changed when the requests are issued from a certain proportion of the outdoor-air treating air conditioners 4 that is set in advance.

Because all of the outdoor-air treating air conditioners 4 are requesting a capacity drop in case (1) described above, shifting in the direction that decreases the capacity will not cause any problem. In addition, in case (2), although the comfort level of a certain room is prioritized at the expense of other rooms to some extent, there will not be a serious problem because air conditioning itself is maintained. However, in this case, an address setting is necessary in order to determine that the request is from the representative outdoor-air treating air conditioner 4. Furthermore, case (3) is most preferable in terms of the energy-saving control because switching in this case is performed in response to the requests from a certain proportion of the outdoor-air treating air conditioners 4. Although the proportion in this case is generally set at 50 % of all units, the ratio may be appropriately changed in accordance with the situation.

In this way, the configurations of the outdoor-air treating air conditioners 4 according to this embodiment are such that, when the actual measured values of the room temperature detected by the room temperature sensors 15 reach the set values Ts, the target values of the pressure and the blowout temperature are automatically changed to the predetermined target pressure and target blowout temperature, respectively; the pressure and blowout temperature are controlled to be constant on the basis of the target pressure and the target blowout temperature; and, also, the thermo-on/off control is performed depending on whether or not the differences between the actual measured values of the room temperature and the set values Ts have reached the set temperature difference (set value Ts ± 1 degree). Because of this, general users can set the room temperature with the same intuitiveness as with the regular indoor air conditioners 3, and when the actual measured values from the room temperature sensors 15 reach the set values Ts, the target values of the pressure and the blowout temperature are automatically changed to the predetermined target pressure and target blowout temperature, respectively. Accordingly, the pressure and the blowout temperature can be controlled to be constant on the basis of those target pressure and target blowout temperature.

Specifically, during cooling, the intake pressure (low pressure) is detected, and the pressure is controlled to be constant by means of compressor rotational speed control so that the detected value reaches the target pressure; and the blowout temperature is also detected by the blowout temperature sensor 13, and the blowout temperature is controlled to be constant by means of degree-of-opening control of the electronic expansion valve 10 so that the detected value reaches the target blowout temperature. During heating, the blowing pressure (high pressure) is detected, and the pressure can be controlled to be constant by means of compressor rotational speed control so that the detected value reaches the target pressure, and the blowout temperature is also detected by the blowout temperature sensor 13, and the blowout temperature can be controlled to be constant by means of degree-of-opening control of the electronic expansion valve 10 so that the detected value reaches the target blowout temperature.

Because of this, overcooling and overheating caused by the outdoor-air treating air conditioners 4 can be prevented and the air conditioning comfort can be improved. In addition, it is possible to save energy by decreasing the operating frequency of the compressor by changing the target pressure, and, also, because the operation is switched to the thermo-off mode (the compressor is stopped) when the difference between the actual measured value from the room temperature sensor 15 and the set value Ts reaches the set temperature difference (set value Ts ± 1 degree), the energy saving effect can be further improved.

In addition, because a certain continuation time is set when changing the pressure and blowout temperature described above, as well as when switching between thermo on/off modes, hunting can be prevented by determining the timing for changing the pressure and blowout temperature, as well as the timing for switching between thermo on/off modes using the certain continuation time, depending on whether or not the actual measured value of the room temperature has reached the set value Ts or whether or not the temperature difference therebetween has reached the set temperature difference (set value Ts ± 1 degree). Accordingly, hunting can be suppressed when automatically changing the pressure and blowout temperature or when switching between thermo on/off modes, which makes it possible to stabilize the control.

In addition, because one or more of or all of the indoor air conditioners in the multi-unit air conditioning system 1 serve as the above-described outdoor-air treating air conditioners 4, in the case in which only the outdoor-air treating air conditioners 4 are operated, with the above-described operation control, overcooling and overheating can be prevented, the air conditioning comfort can be improved, and, also, the energy-saving operation is enabled by operating the compressor at as low an operating frequency as possible or by stopping it. On the other hand, in the case in which the regular indoor air conditioners 3 are operated in combination, by controlling the operation by means of constant-pressure control so that the blowout temperature is kept constant in accordance with the operation of the indoor air conditioners 3, without controlling changing of pressure and blowout temperature at the outdoor-air treating air conditioners 4, , or by operating the indoor air conditioners 3 and the outdoor-air treating air conditioners 4 on the basis of predetermined rules, both units 3 and 4 can be operated in combination. Therefore, the present invention can also be employed in a multi-unit air conditioning system 1 in which a mix of the regular indoor air conditioners 3 and the outdoor-air treating air conditioners 4 are provided.

Furthermore, in the case of the multi-unit air conditioning system of this embodiment, with regard to the control for changing the pressure and blowout temperature, switching can be performed by means of at least one of the following: (1) the target blowout temperature and the target pressure are changed when requests are issued from all of the outdoor-air treating air conditioners 4; (2) the target blowout temperature and the target pressure are changed when a request is issued from the representative outdoor-air treating air conditioner 4 that is specified in advance; and (3) the target blowout temperature and the target pressure are changed when requests are issued from a certain proportion of the outdoor-air treating air conditioners 4 that is set in advance. Accordingly, even if the requests for energy-saving operation control, for which the target pressure and the target blowout temperature are changed, are issued separately from the plurality of the outdoor-air treating air conditioners 4, by presetting which of (1) to (3) is used for switching, the energy-saving operation can be appropriately performed by one of them.

Specifically, in the multi-unit air conditioning system 1, even if the requests for energy-saving operation control are issued separately from the plurality of the outdoor-air treating air conditioners 4, only one set pressure value can be set for the indoor air conditioners 3 and the outdoor-air treating air conditioners 4 that are connected to the same refrigerant system. However, by presetting the conditions as in (1) to (3) described above and by setting, in advance, which condition will be used for switching the energy-saving operation can be performed appropriately.

In addition, because the outdoor controller 6 is provided with the switching means 20 for selectively switching which of (1) to (3) described above will be used for performing the control for changing the pressure and blowout temperature will be performed, the most appropriate switching method can be selected from (1) to (3) by means of the switching means 20 in accordance with the installation environment of the multi-unit air conditioning system 1. Therefore, the multi-unit air conditioning system 1 can be operated in the most appropriate state for the installation environment.

The present invention is not limited to the above-described embodiment, and appropriate modifications are possible within a range that does not depart from the spirit thereof. For example, although the indoor air conditioners 3 and the outdoor-air treating air conditioners 4 in the above-described embodiment have been described in terms of an example in which they are ceiling-embedded type air conditioners, they are not limited thereto, and it is needless to mention that the present invention can similarly be employed with other types of air conditioners, such as floor-standing types, and so forth.

### {Reference Signs List}

1 multi-unit air conditioning system
2 outdoor unit
3 indoor air conditioner (air conditioner)
4 outdoor-air treating air conditioner (outdoor-air treatment unit)
5 refrigerant pipe
6 outdoor controller
7 unit main body
8 indoor heat exchanger
9 blower
10 electronic expansion valve
11 indoor controller
12 intake temperature sensor
13 blowout temperature sensor
14 wired remote controller
15 room temperature sensor
20 switching means

## Claims

1. An outdoor-air treating air conditioner that controls blowout temperature to be constant by means of constant-pressure control and that supplies outdoor air to an indoor space after treating the outdoor air so as to have enthalpy for a set indoor condition, wherein
target values of the pressure and the blowout temperature are automatically changed to a preset target pressure and target blowout temperature, respectively, when an actual measured value of room temperature reaches a set value, so that the pressure and the blowout temperature are controlled to be constant on the basis of the target pressure and the target blowout temperature; and
thermo-on/off control is also performed depending on whether or not a difference between the actual measured value of the room temperature and the set value has reached a set temperature difference.

2. An outdoor-air treating air conditioner according to Claim 1, wherein a certain continuation time is set when changing the pressure and the blowout temperature, as well as when switching between thermo on/off modes.

3. A multi-unit air conditioning system in which a plurality of indoor air conditioners are connected in parallel, and at one or more of or all of the indoor air conditioners serve as outdoor-air treating air conditioners,
wherein the outdoor-air treating air conditioners are the outdoor-air treating air conditioners according to Claim 1 or 2.

4. A multi-unit air conditioning system according to Claim 3, wherein, with regard to the control for changing the pressure and the blowout temperature, switching can be made by means of at least one of the following:
(1) when requests are issued from all of the outdoor-air treating air conditioners;
(2) when a request is issued from a representative outdoor-air treating air conditioner that is specified in advance; and
(3) when requests are issued from a certain proportion of the outdoor-air treating air conditioners that is set in advance.

5. A multi-unit air conditioning system according to Claim 4, comprising:
switching means for selectively switching which of the methods (1) to (3) is used for performing the control for changing the pressure and the blowout temperature.
